# EUROPÄISCHE PATENTSCHRIFT

(11) **EP 0 791 546 B1**
(45) Veröffentlichungstag und Bekanntmachung des Hinweises auf die Patenterteilung: **13.12.2000**
(21) Anmeldenummer: 97250037.5
(22) Anmeldetag: 21.02.1997
(51) Int. Cl.: B65G 17/42

(54) **Kettenförderer**
Chain conveyor
Transporteur à chaînes

(30) Priorität: 21.02.1996 DE 19608291
(43) Veröffentlichungstag der Anmeldung: 27.08.1997
(73) Patentinhaber: RUD-KETTENFABRIK RIEGER & DIETZ GMBH U. CO., 73432 Aalen-Unterkochen (DE)
(72) Erfinder: Dalferth, Hans, 73433 Aalen-Wasseralfingen (DE)
(74) Vertreter: Böning, Manfred, Prof.Dr.-Ing.

(56) Entgegenhaltungen:
- EP-A- 0 367 755
- CH-A- 468 918
- DE-A- 1 781 178
- DE-A- 3 808 827
- FR-A- 2 459 193

## Beschreibung

Die Erfindung betrifft einen Kettenförderer mit durch mindestens zwei Rundstahlketten angetriebenen Förderorganen, bei dem jede Rundstahlkette mit jedem Förderorgan über zwei mit jeweils einem Fuß und Kopf versehene Mitnehmer verbunden ist, wobei die in jeweils zwei aufeinanderfolgende Anschlußkettenglieder gleicher Orientierung eingeschwenkten Köpfe der Mitnehmer jeweils eine einen Längsschenkel eines jeden Anschlußkettengliedes partiell umgreifende Führungsmulde und einen die Einschwenkbewegung begrenzenden, gegen den anderen Längsschenkel anliegenden Anschlag aufweisen und wobei sie einen Abstand voneinander haben, der gleich der Summe aus der Teilung und der zweifachen Nenndicke der Glieder der Rundstahlkette ist.

Ein als Kratzerförderer ausgebildeter Kettenförderer der vorstehenden Art ist aus der DE-A-38 08 827 bekannt. Bei dem bekannten Kettenförderer sind die Füße der Mitnehmer eines jeden Mitnehmerpaares durch Schweißen mit jeweils einer Zwischenplatte verbunden, an der die von Kratzern gebildeten Förderorgane befestigt sind. Der Abstand sowohl zwischen den Füßen als auch zwischen den Köpfen der Mitnehmer der einzelnen Mitnehmerpaare ist dabei gleich groß. Die bekannte Konstruktion erlaubt aufgrund der bei ihr praktizierten Schweißverbindungen den Einsatz von vergleichsweise einfachen, von Gesenkschmiedeteilen gebildeten Mitnehmern. Wenn sie gleichwohl nicht voll zu befriedigen vermag, so deshalb, weil der Einbau und der Austausch der Kratzeisen nur bei entspannter Rundstahlkette vorgenommen werden kann.

Ist man zur Vermeidung längerer Stillstandszeiten des Kettenförderers an einem problemlosen Ein- und Ausbau von Förderorganen an nicht entlasteten Kettensträngen interessiert, so kommt man um den Einsatz von Schraubverbindungen, wie sie z.B. aus der CH-A-468 918 bekannt sind, nicht herum. Bei den in der zuletzt genannten Druckschrift beschriebenen Kettenförderern handelt es sich ebenfalls um Kratzerförderer. Die Kratzeisen sind hier jedoch an ihren sich gegenüberliegenden Enden mit nur jeweils einem stehenden oder liegenden Glied einer Rundstahlkette verbunden. Aufgrund der Tatsache, daß die mit den Förderorganen verbindbaren, als Gewindezapfen ausgebildeten Füße der Mitnehmer und deren Köpfe in jeweils einer quer zur Längsachse der Kettenstränge angeordneten Ebene liegen, eignen sich die bekannten Mitnehmer nicht für den Einsatz in Verbindung mit Förderorganen, die als Becher gemäß DIN 15 236 Teil 4 ausgebildet sind.

Aus der EP 0 367 755 A1 ist schließlich ein Kettenförderer bekannt, dessen Förderorgane, sofern sie von Kratzern gebildet werden, an Anschlußplatten oder, sofern sie von Bechern gebildet werden, an Anschlußplatten und an diesen angeschweißten Winkeln befestigt sind. In beiden Fällen sind die Anschlußplatten über jeweils zwei, paarweise angeordnete Mitnehmer mit jeweils zwei aufeinanderfolgenden, die gleiche Orientierung aufweisenden Anschlußkettengliedern einer Rundstahlkette verbunden. Zur Verbindung der Mitnehmer mit den Anschlußkettengliedern dienen dabei miteinander verschraubte Klemmteile, die beide Längsschenkel jeweils eines Anschlußkettengliedes zwischen sich aufnehmen und von denen eines einen in Längsrichtung der Rundstahlkette versetzten Fuß aufweist, der mit der Anschlußplatte in einer Weise verschraubt ist, die eine gewisse Beweglichkeit der Anschlußplatte gegenüber den Mitnehmern erlaubt. Die Beweglichkeit ist dabei durch die Füße der Mitnehmer umschließende Hülsen gewährleistet, deren Länge größer als die Dicke der jeweiligen Anschlußplatte ist und von denen jeweils eine in einem Rundloch und eine in einem Langloch der Anschlußplatte geführt ist. Die aus einer Vielzahl von Teilen bestehenden und mithin teuren Mitnehmer dieses Kettenförderers eignen sich nicht zum direkten Anschluß von als sogenannte geschulterte Becher ausgebildeten Förderorganen. Ihr Einsatz in Verbindung mit Becherwerken ist folglich nicht nur aufwendig, sondern führt darüber hinaus zu einer vergleichsweise großen Baubreite des jeweiligen Becherwerkes.

Der Erfindung liegt die Aufgabe zugrunde, einen Kettenförderer der in Betracht gezogenen Gattung zu schaffen, bei dem ein Austausch von Förderorganen ohne Lockern der Kettenstränge möglich ist, und bei dem aufgrund der Form der Mitnehmer zu deren Befestigung Bohrungen an den Förderorganen genutzt werden können, die an und für sich für einen Anschluß der Förderorgane an die Rundstahlkette mittels Kettenbügel gemäß DIN 5699 bestimmt sind. Diese Aufgabe wird erfindungsgemäß dadurch gelöst, daß mindestens der Fuß eines Mitnehmers eines jeden Mitnehmerpaares gegenüber seinem Kopf in Längsrichtung der mit ihm verbundenen Rundstahlkette versetzt ist und daß die Füße der Mitnehmer eines jeden Mitnehmerpaares jeweils einzeln fest mit den Rückwänden von als geschulterte Becher ausgebildeten Förderorganen verschraubt sind.

Da die bei dem erfindungsgemäßen Kettenförderer verwendeten Mitnehmer für den Einsatz in Verbindung mit Bechern gemäß DIN 15 236 Teil 4 geeignet sind, ist es möglich, vorhandene Becherwerke, deren Becher an Kettenbügeln aufgehängt sind, im Sinne der Erfindung umzurüsten, um in den Genuß der Vorteile zu gelangen, die homogene, d.h. kettenbügelfreie Kettenstränge bieten. Die Abstützung der Becher an zwei aufeinanderfolgenden Kettengliedern gleicher Orientierung wirkt sich nicht nur positiv auf die Steifigkeit der Becher gegenüber Kippbewegungen um zu den Kettenradachsen parallele Achsen aus, sondern sie führt auch zu günstigen Spannungsverhältnissen im Bereich der Anschlußstellen der Becher an die Rundstahlketten. Schließlich werden in einer besonderen Ausführungsform durch eine gekröpfte Ausbildung der Mitnehmer die Voraussetzungen dafür geschaffen, daß anstelle einstückig mit dem Fuß der Mitnehmer ausgebildete Gewindezapfen problemlos auch in Bohrungen der Mitnehmerfüße steckbare Normschrauben zur Becherbefestigung verwendet werden können.

Weitere Einzelheiten und Merkmale von Ausführungsformen der Erfindung ergeben sich aus den Unteransprüchen und der nachstehenden Beschreibung zweier in der beigefügten Zeichnung dargestellter, besonders vorteilhafter Ausführungsformen. Es zeigen:
Fig. 1 teilweise im Schnitt eine erste Anschlußmöglichkeit eines Bechers an eine der Rundstahlketten eines Kettenförderers,
Fig. 2 einen Schnitt durch die Becheraufhängung gemäß Fig. 1 und
Fig. 3 teilweise im Schnitt eine zweite Anschlußmöglichkeit eines Bechers an eine der Rundstahlketten eines Kettenförderers.

In den Figuren sind 1 und 2 zwei durch ein einzelnes Verbindungsglied 3 miteinander verbundene Anschlußkettenglieder einer Rundstahlkette 4 eines Doppelkettenförderers, dessen Förderorgane 5 von genormten Bechern gebildet werden. Die Rückwände 6 der Förderorgane weisen Bohrungen 7 und 8 auf, die mit Bohrungen 9 und 10 eines als Platte ausgebildeten Zwischenstückes 11 aus Kunststoff fluchten. Verbunden sind die Anschlußkettenglieder 1 und 2 mit den Förderorganen 5 mit Hilfe von zwei identisch geformten einteiligen Mitnehmern 12, die jeweils einen Fuß 13 und einen Kopf 14 aufweisen. Die Füße 13 der Mitnehmer 12 sind mit einer Bohrung 15 versehen. Durch die jeweils miteinander fluchtenden Bohrungen 7,9,15 bzw. 8,10,15 ist jeweils der Gewindezapfen 16 einer handelsüblichen Befestigungsschraube gesteckt und an der Innenseite der Rückwand 6 des Förderorganes 5 durch eine Mutter 17 gesichert. Der Einsatz handelsüblicher Befestigungsschrauben bietet gegenüber Lösungen mit integralem Gewindezapfen fertigungstechnische Vorteile. Der Abstand A zwischen den Längsachsen 18 der Gewindezapfen 16 ist der Norm entsprechend gleich der Teilung t der Glieder der Rundstahlkette 4. Der Abstand B zwischen den Köpfen 14 der Mitnehmer 12 ist demgegenüber größer, und zwar gleich der Summe aus der Teilung t und der zweifachen Nenndicke d der Anschlußkettenglieder 1 und 2. Es ist möglich, das Zwischenstück 11 als Hilfsmittel zum Zusammenhalten der Mitnehmer 1 und 2 sowie der Befestigungsschrauben zur Sicherung dieser Teile als vormontierte Einheiten an den Kettensträngen zu nutzen.

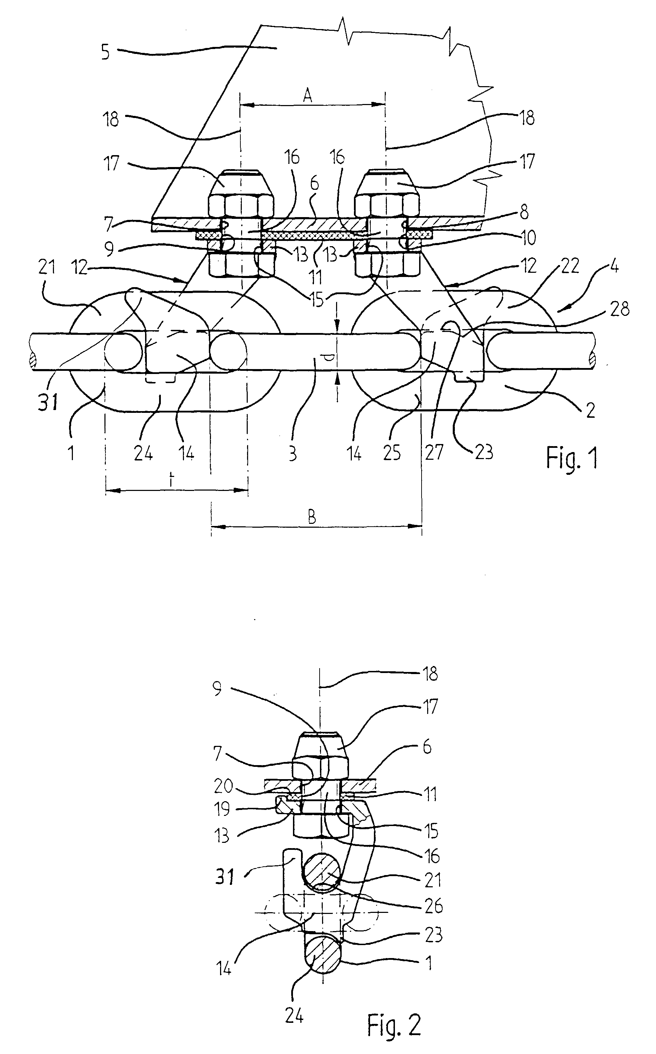

Wie aus Fig. 2 erkennbar, sind die Füße 13 der Mitnehmer 12 mit Anschlägen 19 versehen, die gegen Gegenanschläge 20 bildende Seitenflächen des Zwischenstückes 11 anliegen und auf diese Weise die Mitnehmer 1 und 2 gegen Drehung um die Längsachse ihrer Gewindezapfen 16 sichern.

Die Köpfe 14 der Mitnehmer 1,2 umschließen nach Art einer Gabel jeweils partiell den dem Förderorgan 5 zugewandten Längsschenkel 21 bzw. 22 der Anschlußkettenglieder 1,2 und stützen sich zudem über jeweils einen Anschlag 23 am jeweils anderen Längsschenkel 24 bzw. 25 der Anschlußkettenglieder 1,2 ab. Die zur Gliedaußenseite gerichteten Flächenabschnitte der Längsschenkel 24 und 25 liegen frei. Die Rundstahlkette 4 kann folglich problemlos mit Rillen versehene Umlenkrollen passieren. Da die Köpfe 14 der Mitnehmer 12 von verschiedenen Seiten in die Anschlußkettenglieder 1,2 eingeschwenkt sind, ist eine einwandfreie Führung und Abstützung der Förderorgane 15 durch die Rundstahlkette 4 gewährleistet.

Die Führungsmulden 26 für die Längsschenkel 21 und 22 weisen jeweils einen das Verschleißverhalten positiv beeinflussenden, parallel zur Rückwand 6 des Förderorganes 5 verlaufenden Abschnitt 27 und einen den einwandfreien Umlauf der Rundstahlkette 4 um die Antriebs- und Umlenkkettenräder des Kettenförderers gewährleistenden schräg zum Abschnitt 27 verlaufenden Abschnitt 28 auf.

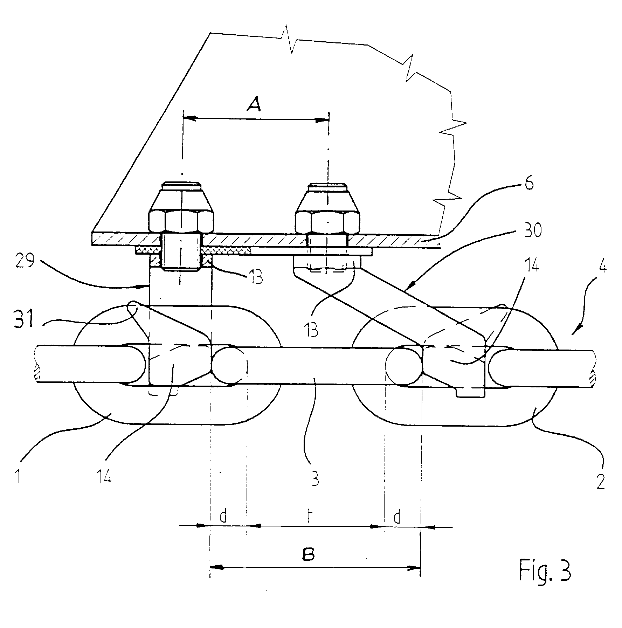

Während bei der Ausführungsform gemäß den Figuren 1 und 2 zwei identische, um jeweils gleiche Beträge gekröpfte Mitnehmer 12 verwendet werden, benutzt man bei der Ausführungsform gemäß Fig. 3 einen geraden Mitnehmer 29 und einen gekröpften Mitnehmer 30. Wie im zuerst beschriebenen Fall ist auch hier der Abstand B zwischen den Köpfen 14 der aufeinanderfolgenden Mitnehmer gleich der Summe aus der zweifachen Nenndicke d und der Teilung t der Glieder der Rundstahlkette 4.

Bei beiden beschriebenen Ausführungsformen bildet der Teil des Kopfes 14, der auf der Seite der Längsschenkel 21,22 angeordnet ist, die dem den Fuß 13 mit dem Kopf 14 verbindenden Abschnitt des Mitnehmers 12 gegenüberliegt, einen nasenförmigen Vorsprung 31. Dieser Vorsprung 31 erfüllt die Funktion eines Sicherungsanschlages, der eine Trennung der Förderorgane 5 von den Anschlußkettengliedern 1,2 in Situationen verhindert, in denen es zum Stau und zum Zusammenschieben von Gliedern der Rundstahlketten beim Passieren der unteren Umlenkräder von Becherwerken kommt.

## Patentansprüche

1. Kettenförderer mit durch mindestens zwei Rundstahlketten (4) angetriebenen Förderorganen (5), bei dem jede Rundstahlkette (4) mit jedem Förderorgan über zwei mit jeweils einem Fuß (13) und Kopf (14) versehene Mitnehmer (12;29, 30) verbunden ist, wobei die in jeweils zwei aufeinanderfolgende Anschlußkettenglieder (1,2) gleicher Orientierung eingeschwenkten Köpfe (14) der Mitnehmer (12;29,30) jeweils eine einen Längsschenkel (21,22) eines jeden Anschlußkettengliedes (1,2) partiell umgreifende Führungsmulde und einen die Einschwenkbewegung begrenzenden, gegen den anderen Längsschenkel anliegenden Anschlag (23) aufweisen und wobei sie einen kleinsten Abstand (B) voneinander haben, der gleich der Summe aus der Teilung (t) und der zweifachen Nenndicke (d) der Glieder der Rundstahlkette (4) ist, **dadurch gekennzeichnet,** daß mindestens der Fuß (13) eines Mitnehmers (12;30) eines jeden Mitnehmerpaares gegenüber seinem Kopf (14) in Längsrichtung der mit ihm verbundenen Rundstahlkette (4) versetzt ist und daß die Füße (13) der Mitnehmer (12;29,30)) eines jeden Mitnehmerpaares jeweils einzeln fest mit den Rückwänden (6) von als geschulterte Becher ausgebildeten Förderorganen (5) verschraubt sind.

2. Kettenförderer nach Anspruch 1, **dadurch gekennzeichnet,** daß die Füße (13) beider Mitnehmer (12) eines jeden Mitnehmerpaares um gleiche Beträge in entgegengesetzte Richtungen gegenüber den Köpfen (14) der Mitnehmer (12) versetzt sind.

3. Kettenförderer nach Anspruch 1 oder 2, **dadurch gekennzeichnet,** daß der Abstand (A) zwischen den Füßen (13) der Mitnehmer (12;29,30) kleiner als der Abstand (B) zwischen den Köpfen (14) der Mitnehmer (12;29,30) ist.

4. Kettenförderer nach Anspruch 3, **dadurch gekennzeichnet,** daß die Längsachsen (18) der Gewindezapfen (16) der Schraubverbindungen einen Abstand (A) voneinander haben, der gleich der Teilung (t) der Glieder der Rundstahlkette (4) ist.

5. Kettenförderer nach einem oder mehreren der Ansprüche 1 bis 4, **dadurch gekennzeichnet,** daß die Gewindezapfen (16) der Schraubverbindungen in einer mittig durch die Längsachse der Rundstahlkette (4) verlaufenden Ebene liegen.

6. Kettenförderer nach einem oder mehreren der Ansprüche 1 bis 5, **dadurch gekennzeichnet,** daß die Köpfe (14) der Mitnehmer (12;29,30) den jeweils dem Förderorgan (5) zugewandten Längsschenkel (21,22) der Anschlußkettenglieder (1,2) nach Art einer Gabel umschließen.

7. Kettenförderer nach einem oder mehreren der Ansprüche 1 bis 6, **dadurch gekennzeichnet,** daß die Füße (13) der Mitnehmer (12) mit jeweils einem zur Drehsicherung des Mitnehmers (12) dienenden Anschlag (19) versehen sind.

8. Kettenförderer nach Anspruch 7, **dadurch gekennzeichnet,** daß den Anschlägen (19) an den Füßen (13) der Mitnehmer (12) eines jeden Mitnehmerpaares Gegenanschläge (20) an einem zwischen den Füßen (13) und dem Förderorgan (5) angeordneten Zwischenstück (11) zugeordnet sind.

9. Kettenförderer nach Anspruch 8, **dadurch gekennzeichnet,** daß das Zwischenstück (11) als eine mit zwei Bohrungen (9,10) versehene Platte ausgebildet ist, deren Längsseiten die Gegenanschläge (20) bilden.

10. Kettenförderer nach einem oder mehreren der Ansprüche 1 bis 9, **dadurch gekennzeichnet,** daß die Füße (13) der Mitnehmer (12) Bohrungen (15) für die Gewindezapfen (16) von Befestigungsschrauben aufweisen.

11. Kettenförderer nach Anspruch 9 oder 10, **dadurch gekennzeichnet,** daß das Zwischenstück (11) als Hilfsmittel zur Vormontage der Mitnehmer (12) und der Befestigungsschrauben an der Rundstahlkette (4) ausgebildet ist.

12. Kettenförderer nach Anspruch 11, **dadurch gekennzeichnet,** daß das Zwischenstück (11) aus Kunststoff besteht.

13. Kettenförderer nach einem oder mehreren der Ansprüche 1 bis 12, **dadurch gekennzeichnet,** daß die Köpfe (14) der Mitnehmer (12;29,30)) mit von Vorsprüngen (31) gebildeten, ein Aushängen der Anschlußkettenglieder (1,2) loser Rundstahlketten (4) verhindernden Sicherungsanschlägen versehen sind.

14. Kettenförderer nach einem oder mehreren der Ansprüche 1 bis 13, **dadurch gekennzeichnet,** daß die von den Köpfen (14) gebildeten Führungsmulden für die den Förderorganen (5) zugewandten Längsschenkel (21,22) der Anschlußkettenglieder (1,2) einen parallel zur Längsachse dieser Längsschenkel (21,22) verlaufenden Abschnitt (27) und einen schräg zu diesem Abschnitt (27) verlaufenden weiteren Abschnitt (28) aufweisen.

15. Kettenförderer nach Anspruch 14, **dadurch gekennzeichnet,** daß der Abstand zwischen den weiteren Abschnitten (28) größer als zwischen den zuerst genannten Abschnitten (27) ist und daß die den anderen Längsschenkeln (24,25) zugeordneten Führungsmulden diese anderen Längsschenkel (24,25) nur in dem den jeweils weiteren Abschnitten (28) gegenüberliegenden Bereich abstützen.

## Claims

1. Chain conveyor having conveying elements (5) driven by at least two round-steel chains (4), in which conveyor each round-steel chain (4) is connected to each conveying element via two carry-along elements (12; 29, 30) each provided with a foot (13) and head (14), it being the case that the heads (14) of the carry-along elements (12; 29, 30), said heads having been pivoted into in each case two successive connection chain links (1, 2) of the same orientation, each have a guide hollow, which engages round part of one longitudinal leg (21, 22) of each connection chain link (1, 2), and a stop (23), which bounds the pivoting-in movement and butts against the other longitudinal leg, and it being the case that they are spaced apart from one another by an extremely small distance (B) which is equal to the sum of the spacing (t) between the links of the round-steel chain (4) and twice the nominal thickness (d) of said links, characterized in that at least the foot (13) of a carry-along element (12; 30) of each pair of carry-along elements is offset in relation to the head (14) in the longitudinal direction of the round-steel chain (4) connected thereto, and in that the feet (13) of the carry-along elements (12; 29, 30) of each pair of carry-along elements are screwed firmly, individually in each case, to the rear walls (6) of conveying elements (5) designed as buckets with shoulders.

2. Chain conveyor according to Claim 1, characterized in that the feet (13) of the two carry-along elements (12) of each pair of carry-along elements are offset in relation to the heads (14) of the carry-along elements (12) by the same distances in opposite directions.

3. Chain conveyor according to Claim 1 or 2, characterized in that the distance (A) between the feet (13) of the carry-along elements (12; 29, 30) is smaller than the distance (B) between the heads (14) of the carry-along elements (12; 29, 30).

4. Chain conveyor according to Claim 3, characterized in that the longitudinal axes (18) of the threaded pins (16) of the screw-connections are spaced apart from one another by a distance (A) which is equal to the spacing (t) between the links of the round-steel chain (4).

5. Chain conveyor according to one or more of Claims 1 to 4, characterized in that the threaded pins (16) of the screw-connections are located in a plane which runs centrally through the longitudinal axis of the round-steel chain (4).

6. Chain conveyor according to one or more of Claims 1 to 5, characterized in that the heads (14) of the carry-along elements (12; 29, 30) enclose the longitudinal legs (21, 22) of the connection chain links (1, 2), said longitudinal legs being directed towards the conveying element (5) in each case, in the manner of a fork.

7. Chain conveyor according to one or more of Claims 1 to 6, characterized in that the feet (13) of the carry-along elements (12) are provided with in each case one stop (19) serving for preventing the carry-along element (12) from rotating.

8. Chain conveyor according to Claim 7, characterized in that the stops (19) on the feet (13) of the carry-along elements (12) of each pair of carry-along elements are assigned mating stops (20) on an intermediate element (11) arranged between the feet (13) and the conveying element (5).

9. Chain conveyor according to Claim 8, characterized in that the intermediate element (11) is designed as a plate which is provided with two bores (9, 10) and of which the longitudinal sides form the mating stops (20).

10. Chain conveyor according to one or more of Claims 1 to 9, characterized in that the feet (13) of the carry-along elements (12) have bores (15) for the threaded pins (16) of fastening screws.

11. Chain conveyor according to Claim 9 or 10, characterized in that the intermediate element (11) is designed as an auxiliary means for the preliminary assembly of the carry-along elements (12) and the fastening screws on the round-steel chain (4).

12. Chain conveyor according to Claim 11, characterized in that the intermediate element (11) consists of plastic.

13. Chain conveyor according to one or more of Claims 1 to 12, characterized in that the heads (14) of the carry-along elements (12; 29, 30) are provided with securing stops which are formed by protrusions (31) and prevent disengagement of the connection chain links (1, 2) of loose round-steel chains (4).

14. Chain conveyor according to one or more of Claims 1 to 13, characterized in that the guide hollows which are formed by the heads (14) and are intended for the longitudinal legs (21, 22) of the connection chain links (1, 2), said longitudinal legs being directed towards the conveying elements (5), have a section (27) which runs parallel to the longitudinal axis of said longitudinal legs (21, 22) and a further section (28), which runs obliquely in relation to said section (27).

15. Chain conveyor according to Claim 14, characterized in that the distance between the further sections (28) is greater than between the first-mentioned sections (27), and in that the guide hollows which are assigned to the other longitudinal legs (24, 25) only support said other longitudinal legs (24, 25) in the region which is located opposite the respectively further sections (28).

## Revendications

1. Transporteur à chaîne(s) comprenant des organes de transport (5) entraînés par au moins deux chaînes en acier rond (4), dans lequel chaque chaîne en acier rond (4) est reliée à chaque organe de transport par l'entremise de deux entraîneurs (12; 29,30) pourvus respectivement d'un pied (13) et d'une tête (14), les têtes (14) des entraîneurs (12; 29,30) articulées respectivement dans des maillons de chaîne raccordés successifs (1,2) de même orientation présentant respectivement une cuvette de guidage enveloppant partiellement une aile longitudinale (21,22) de chaque maillon de chaîne raccordé (1,2) et une butée (23) limitant le mouvement pivotant et s'appuyant contre l'autre aile longitudinale, et ayant une distance minimale mutuelle (B) qui est égale à la somme du pas (t) et de deux fois l'épaisseur théorique (d) des maillons de la chaîne en acier rond (4), caractérisé en ce qu'au moins le pied (13) d'un entraîneur (12; 30) de chaque paire d'entraîneurs est décalé par rapport à sa tête (14) dans la direction longitudinale de la chaîne en acier rond (4) qui lui est reliée et en ce que les pieds (13) des entraîneurs (12; 29,30) de chaque paire d'entraîneurs sont solidement vissés individuellement, respectivement, sur les parois arrière (6) d'organes de transport (5) conformés en godets à épaulement.

2. Transporteur à chaîne(s) selon la revendication 1, caractérisé en ce que les pieds (13) des deux entraîneurs (12) de chaque paire d'entraîneurs sont décalés des mêmes distances dans des directions opposées par rapport aux têtes (14) des entraîneurs (12).

3. Transporteur à chaîne(s) selon la revendication 1 ou 2, caractérisé en ce que la distance (A) entre les pieds (13) des entraîneurs (12; 29,30) est plus petite que la distance (B) entre les têtes (14) des entraîneurs (12; 29,30).

4. Transporteur à chaîne(s) selon la revendication 3, caractérisé en ce que les axes longitudinaux (18) des tourillons filetés (16) des liaisons à vis ont une distance mutuelle (A) qui est égale au pas (t) des maillons de la chaîne en acier rond (4).

5. Transporteur à chaîne(s) selon une ou plusieurs des revendications 1 à 4, caractérisé en ce que les tourillons filetés (16) des liaisons à vis se trouvent dans un plan s'étendant au centre à travers l'axe longitudinal de la chaîne en acier rond (4).

6. Transporteur à chaîne(s) selon une ou plusieurs des revendications 1 à 5, caractérisé en ce que les têtes (14) des entraîneurs (12; 29,30) entourent l'aile longitudinale (21,22), tournée respectivement vers l'organe de transport (5), des maillons de chaîne raccordés (1,2) à la manière d'un étrier.

7. Transporteur à chaîne(s) selon une ou plusieurs des revendications 1 à 6, caractérisé en ce que les pieds (13) des entraîneurs (12) sont pourvus respectivement d'une butée (19) servant d'arrêt en rotation de l'entraîneur (12).

8. Transporteur à chaîne(s) selon la revendication 7, caractérisé en ce que des contre-butées (20) sont affectées aux butées (19) des pieds (13) des entraîneurs (12) de chaque paire d'entraîneurs, sur une pièce intermédiaire (11) agencée entre les pieds (13) et l'organe de transport (5).

9. Transporteur à chaîne(s) selon la revendication 8, caractérisé en ce que la pièce intermédiaire (11) se présente sous la forme d'une plaque pourvue de deux alésages (9,10), dont les côtés longitudinaux forment les contre-butées (20).

10. Transporteur à chaîne(s) selon une ou plusieurs des revendications 1 à 9, caractérisé en ce que les pieds (13) des entraîneurs (12) présentent des alésages (15) pour les tourillons filetés (16) de vis de fixation.

11. Transporteur à chaîne(s) selon la revendication 9 ou 10, caractérisé en ce que la pièce intermédiaire (11) se présente sous la forme d'un moyen auxiliaire pour le pré-montage des entraîneurs (12) et des vis de fixation sur la chaîne en acier rond (4).

12. Transporteur à chaîne(s) selon la revendication 11, caractérisé en ce que la pièce intermédiaire (11) est constituée de matière plastique.

13. Transporteur à chaîne(s) selon une ou plusieurs des revendications 1 à 12, caractérisé en ce que les têtes (14) des entraîneurs (12; 29,30) sont pourvues de ferrures de fixation formées de saillies (31) et empêchant un dégagement des maillons de chaîne raccordés (1,2) de chaînes en acier rond (4) desserrées.

14. Transporteur à chaîne(s) selon une ou plusieurs des revendications 1 à 13, caractérisé en ce que les cuvettes de guidage formées par les têtes (14) pour les ailes longitudinales (21,22), tournées vers les organes de transport (5), des maillons de chaînes raccordés (1,2) présentent une section (27) s'étendant parallèlement à l'axe longitudinal de ces ailes longitudinales (21,22) et une autre section (28) s'étendant en oblique par rapport à cette section (27).

15. Transporteur à chaîne(s) selon la revendication 14, caractérisé en ce que la distance entre les autres sections (28) est plus grande que celle entre les premières sections mentionnées (27) et en ce que les cuvettes de guidage affectées aux autres ailes longitudinales (24,25) ne soutiennent ces autres ailes longitudinales (24,25) que dans la zone en regard des autres sections respectives (28).
